Europäisches Patentamt

European Patent Office

Office européen des brevets

(11) Publication number : **0 633 273 A1**

(12) **EUROPEAN PATENT APPLICATION**

(21) Application number : **94304871.0**

(22) Date of filing : **04.07.94**

(51) Int. Cl.$^6$ : **C08F 14/06,** C08F 2/20

(30) Priority : **05.07.93 JP 191720/93**

(43) Date of publication of application :
**11.01.95 Bulletin 95/02**

(84) Designated Contracting States :
**ES FR NL PT**

(71) Applicant : **SHIN-ETSU CHEMICAL CO., LTD.**
**6-1, Ohtemachi 2-chome**
**Chiyoda-ku Tokyo (JP)**

(72) Inventor : **Ueda, Takuya**
**Renshi-ryo,**
**5-7-35, Shittechuo,**
**Kamisu-machi**
**Kashima-gun, Ibaraki-ken (JP)**
Inventor : **Amano, Tadashi**
**5-3-22, Shittechuo,**
**Kamisu-machi**
**Kashima-gun, Ibaraki-ken (JP)**
Inventor : **Fujiwara, Makoto**
**5-7-35, Shittechuo,**
**Kamisu-machi**
**Kashima-gun, Ibaraki-ken (JP)**

(74) Representative : **Votier, Sidney David et al**
**CARPMAELS & RANSFORD**
**43, Bloomsbury Square**
**London WC1A 2RA (GB)**

(54) **Process for producing vinyl chloride polymers.**

(57) A process for producing a vinyl chloride polymer comprising the steps of charging a vinyl chloride monomer or a vinylic monomer mixture containing a vinyl chloride monomer, an oil-soluble polymerization initiator, a dispersion stabilizer and water into a polymerization vessel, and suspension-polymerizing said monomer in an aqueous medium, wherein said water is charged into the polymerization vessel in a state of pH 2.5-5.0. According to this production process, a vinyl chloride polymer having good particle size distribution, initial coloration, heat stability, demonomering property (removal of monomer) and the like is obtained in a broad range of an oxygen amount without being affected by the oxygen amount in the polymerization vessel. Further, the polymer obtained by the production process presents a formed article having fewer fish eyes when it is formed. In addition, because an adhesion amount of polymer scales to an inner wall of the polymerization vessel is extremely less, productivity is good.

EP 0 633 273 A1

## BACKGROUND OF THE INVENTION

### 1. Field of the Invention

The present invention relates to a process for producing vinyl chloride polymers by suspension polymerization.

### 2. Description of Prior Arts

As processes for producing vinyl chloride polymers which present molded articles having high porosity, excellent processability and fewer fish eyes, there are known processes for producing vinyl chloride polymers by suspension polymerization using a partially saponified polyvinyl alcohol having an average polymerization degree of not more than 600 and a saponification degree of not more than 55 mol% as a dispersion stabilizer (Japanese Patent Laid-open (KOKAI) Nos. 52-5886, 55-112210, 53-6392 and 63-264611 and Japanese Patent Publication (KOKOKU) No. 61-18562 etc.).

However, in the case of the aforementioned processes, particle size distribution of an obtained polymer is deficient in stability, and for example, if polymerization is performed under a condition of a small oxygen amount in a polymerization system, coarse particles of a polymer are apt to be generated. Further, scales are apt to adhere to an inner wall of a polymerization vessel during this event, and the obtained polymer is apt to cause fish eyes when it is processed into a sheet shape. These problems can be suppressed to some extent by increasing the oxygen amount in the polymerization vessel to about 80 to 200 ppm, however, when the oxygen amount is increased in such a manner, the obtained polymer undergoes high initial coloration upon forming processing, and heat stability lowers.

## SUMMARY OF THE INVENTION

Thus a task of the present invention is to provide a process for producing a vinyl chloride polymer comprising suspension-polymerizing vinyl chloride or a mixture of monomers containing vinyl chloride in an aqueous medium containing a dispersion stabilizer, as a process for producing vinyl chloride polymers wherein vinyl chloride polymers which present formed articles, in which initial coloration upon forming processing is less, heat stability is good and fewer fish eyes exist even after being processed into a sheet shape, can be stably produced in a broad oxygen amount range without being affected so much by an oxygen amount in a polymerization vessel.

As a result of vigorous investigation by the present inventors in order to solve the aforementioned task, the present invention has been achieved. Namely, the present invention provides:

a process for producing a vinyl chloride polymer comprising the steps of:

charging a vinyl chloride monomer or a vinylic monomer mixture containing a vinyl chloride monomer, an oil-soluble polymerization initiator, a dispersion stabilizer and water into a polymerization vessel; and

suspension-polymerizing said monomer in an aqueous medium;

wherein said water is charged into the polymerization vessel in a state of pH 2.5-5.0.

According to the aforementioned process, the vinyl chloride polymer having good quality is obtained without being affected so much by an oxygen amount in the polymerization vessel. Namely, with respect to the obtained polymer, initial coloration upon forming processing is less, heat stability is high, and fewer fish eyes exist even after being formed into a sheet shape.

## DETAILED DESCRIPTION OF PREFERRED EMBODIMENTS

The present invention will be described in detail hereinafter.

### Charge water

In the present invention, it is necessary that pH of the water to be charged into the polymerization vessel is 2.5-5.0, preferably 3.0-4.5, and more preferably 3.0-4.3. If pH of the charge water is lower than 2.5, it becomes impossible to neglect corrosion of a polymerization apparatus and the like. On the other hand, if pH exceeds 5.0, stability of the suspension system lowers, plasticizer absorption of the obtained polymer lowers, and coarse particles of the polymer are apt to be generated, resulting in that fish eyes are apt to increase when the obtained polymer is processed into a sheet shape, and increase in the amount of scale deposition on an inner wall of the polymerization vessel and the like is apt to take place. Incidentally, pH of the charge water may be within the aforementioned range upon charging.

It is usually preferable that the charge water having a pH of 2.5-5.0 is used for the polymerization reaction immediately after preparation. When the charge water is left for a long time, attention is required in that it should be stored in a vessel having high corrosion resistance so as not to corrode the apparatus and the like.

A method for charging the water may be a method which is usually used. The water may be charged after heating, or may be charged simultaneously with the monomer, the dispersion stabilizer and the like. When the water is charged after heating, its temperature range is preferably 30 °C to 60 °C.

With respect to pH adjustment of the water to be charged, for example, water deionized with an ion exchange resin or the like (usually pH = 5.5-7.0, electrical conductance: about 1-1000 MS/cm) may be added with a pH adjustor to provide a pH of 2.5-5.0. As the pH adjustor, for example, there may be exemplified inorganic acids such as hydrochloric acid, sulfuric acid, nitric acid, phosphoric acid and the like; organic acids such as acetic acid and the like. These inorganic acids and organic acids may be used singly, or in combination of two or more. Further, an inorganic acid and an organic acid may be used in combination. Further, a buffer agent may be used in combination with an aforementioned acid.

Dispersion stabilizer

The dispersion stabilizer used in the present invention is not specially limited, however, for example, there may be exemplified partially saponified polyvinyl alcohol; cellulose derivatives such as methyl cellulose, ethyl cellulose, hydroxyethyl cellulose, hydroxypropyl cellulose, hydroxypropylmethyl cellulose and the like; polyacrylic acid; copolymers of vinyl acetate and maleic anhydride; polyvinyl pyrrolidone; natural or synthetic polymeric compounds such as gelatin and the like.

The amount of the dispersion stabilizer is usually 0.005-5.0 parts by weight, more preferably 0.01-1.0 part by weight per 100 parts by weight of the monomer.

Preferably as the dispersion stabilizer, (A) an oil-soluble partially saponified polyvinyl alcohol having an average polymerization degree of 150-600 and a saponification degree of 20-60 mol% (more preferably 20-55 mol%) and (B) a water-soluble polymer are used in combination.

As the water-soluble polymer dispersion stabilizer (B), for example, there may be exemplified water-soluble partially saponified polyvinyl alcohol having an average polymerization degree of 800-3000 and a saponification degree of 70-90 mol%; cellulose derivatives such as methyl cellulose, ethyl cellulose, hydroxyethyl cellulose, hydroxypropyl cellulose, hydroxypropylmethyl cellulose and the like; polyacrylic acid; copolymers of vinyl acetate and maleic anhydride; polyvinyl pyrrolidone; gelatin and the like. Among them, a water-soluble partially-saponified polyvinylalcohol having an average polymerization degree of 800 to 3,000 and a saponification degree of 70 to 90 mol% and hydroxypropylmethyl cellulose are preferable.

When the aforementioned (A) and (B) are used together as the dispersion stabilizer, the dispersion stabilizer (A) is charged usually in an amount of 0.005-1.0 part by weight, preferably 0.005-0.07 part by weight, more preferably 0.01-0.04 part by weight per 100 parts by weight of the monomer. Further, the dispersion stabilizer (B) is charged in an amount of 0.005-4.0 parts by weight, preferably 0.005-0.4 part by weight, more preferably 0.01-0.1 part by weight per 100 parts by weight of the monomer. Further, a weight ratio of the dispersion stabilizers (A)/(B) is usually in a range of 1/10 o 4/1, preferably 1/2 to 2/1.

Monomer

The monomer used in the present invention is vinyl chloride or a mixture of monomers containing vinyl chloride.

The aforementioned mixture of monomers containing vinyl chloride comprises vinyl chloride and one or more monomers copolymerizable with vinyl chloride. As such monomers copolymerizable with vinyl chloride, for example, there may be exemplified vinyl esters such as vinyl acetate, vinyl propionate and the like; acrylic esters such as methyl acrylate, ethyl acrylate and the like; methacrylate esters such as methyl methacrylate, ethyl methacrylate and the like; olefins such as ethylene, propylene and the like; maleic anhydride; acrylonitrile; styrene; vinylidene chloride and the like. As the aforementioned mixture of monomers containing vinyl chloride, usually one containing vinyl chloride in an amount of not less than 50 % by weight is used.

Polymerization initiator

As the polymerization initiator, oil-soluble polymerization initiators, which have been hitherto used for polymerization of vinyl chloride, are used. As such oil-soluble polymerization initiators, for example, there may be exemplified perester compounds such as t-butyl peroxyneodecanoate, t-hexyl peroxyneodecaroate, t-hexyl

EP 0 633 273 A1

peroxypivalate, α-cumyl peroxyneodecanoate, t-hexyl peroxyneohexanoate, 1,1,3,3-tetramethylbutyl peroxyneodecanoate and the like; percarbonate compounds such as diisopropyl peroxydicarbonate, di-2-ethylhexyl peroxydicarbonate, di-2-ethoxyethyl peroxydicarbonate, dimethoxyisopropyl peroxydicarbonate and the like; peroxide compounds such as decanoyl peroxide, lauroyl peroxide, benzoyl peroxide, cumene hydroperoxide, cyclohexanone peroxide, 2,4-dichlorobenzoyl peroxide, p-menthane hydroperoxide, 3,5,5-trimethylhexanoyl peroxide, isobutyryl peroxide, acetylcyclohexylsulfonyl peroxide and the like; azo compounds such as α,α'-azobisisobutyronitrile, α,α'-azo- bis(2,4-dimethylvaleronitrile), α,α'-azobis(4-methoxy-2,4-dimethylvaleronitrile) and the like.

The aforementioned oil-soluble polymerization initiators can be used either singly or in combination of two or more.

The oil-soluble polymerization initiator may be added to the water or the monomer in the polymerization vessel during charging or after completion of charging, or it may be homogeneously mixed with the monomer beforehand to be charged together with the monomer. Alternatively, the oil-soluble initiator may be charged after mixing it with an aqueous medium to provide an aqueous emulsion.

Other additives

In the production process of the present invention, optionally it is possible to add, to the polymerization system, solid dispersing agents such as calcium phosphate, hydroxyapatite and the like; nonionic emulsifiers such as sorbitan monolaurate, sorbitan trioleate, polyoxyethylene alkyl ether and the like; anionic emulsifiers such as sodium lauryl sulfate, sodium dodecylbenzenesulfonate, sodium dioctylsulfosuccinate and the like; polymerization adjusting agents; chain transfer agents; pH adjustors; gelation modifiers; charge inhibitors; crosslinking agents; stabilizers; fillers; scale inhibitors; antioxidants and the like which have been used for production of vinyl chloride polymers.

Polymerization

A general embodiment of the present invention will be described below.

After separately preparing water having a pH of 2.5-5.0 for charging, the water, a dispersion stabilizer and a polymerization initiator are charged into a polymerization vessel. Next, the interior of the polymerization vessel is evacuated and subjected to pressure reduction, and then a monomer is charged. Generally after the charge of the monomer, polymerization is initiated by gradually raising the temperature at the inside of the polymerization vessel. The oxygen amount in the polymerization vessel at the time point of the initiation of polymerization is preferably in a range of 10-70 ppm, more preferably 10-60 ppm based on the weight with respect to the charged monomer. If the oxygen amount exceeds 70 ppm, initial coloration deteriorates when an obtained polymer is formed into a sheet shape, and necessary polymerization time becomes long. Herein the oxygen amount in the polymerization vessel means a total amount of oxygen which exists in a gas phase in the polymerization vessel and oxygen which has been dissolved an is present in a liquid phase.

After completion of the charge of the materials as described above, temperature raising is started while performing agitation, and polymerization is performed at a reaction temperature of 30-80 °C. During the polymerization, optionally one or more of water, a dispersion stabilizer and a polymerization initiator are supplemented. After completion of the polymerization reaction, the unreacted monomer is recovered, and then polymer slurry is dehydrated and dried to obtain an aimed polymer.

The amount of the water to be charged for the polymerization is usually 20-500 parts by weight per 100 parts by weight of the monomer, and the amount of the polymerization initiator is 0.001-5 parts by weight per 100 parts by weight of the monomer.

EXAMPLES

Examples of the present invention will be described below. The present invention is not limited by the following Examples at all.

Example 1

900 kg of a deionized water separately adjusted to have a pH of 4 by using sulfuric acid, 6500 g of 5 % by weight of an aqueous solution of partially saponified polyvinyl alcohol having a saponification degree of 78 mol% and an average polymerization degree of 2000, and 975 g of 20 % by weight of a water/methanol solution (water/methanol weight ratio: 1/1) of a partially saponified polyvinyl alcohol having a saponification degree of

4

48 mol% and an average polymerization degree of 300 were charged into a polymerization vessel made of stainless steel having an internal volume of 21 m³ equipped with a water jacket and an agitator. Hot water was fed to the jacket to raise the internal temperature of the polymerization vessel to 30 °C while agitating a mixture charged in the polymerization vessel, and the interior of the polymerization vessel was evacuated to achieve 100 mmHg·abs. When the oxygen amount in the polymerization vessel was measured immediately after completion of the evacuation, it was 33 g. The measurement of the oxygen amount in the polymerization vessel was performed by measuring the amount of oxygen in the gas phase part and that of oxygen dissolved in the suspension by gas chromatography separately and calculating the sum thereof. Specifically, the gas in the gas phase part and the suspension were respectively sampled and subjected to gas chromatography. From the values of oxygen amounts measured and the known volumes of the gas phase part and the suspension, the whole amount of oxygen in the polymerization vessel was obtained.

Next, 650 kg of a vinyl chloride monomer was charged while agitating the mixture in the polymerization vessel, and then 590 g of t-butyl peroxyneodecanoate was introduced under pressure by a pump. Simultaneously with the charge of the initiator, hot water was fed to the water jacket to start temperature raising of the interior of the polymerization vessel, and polymerization was initiated.

The polymerization reaction was performed while maintaining the temperature at 51 °C, and the polymerization was stopped at a time point at which the internal pressure lowered to 6.0 kg/cm² G. A time period from the start of the polymerization to the stop of the polymerization was measured as polymerization time. After recovering unreacted monomer, a slurry-like polymer was recovered, followed by dehydration and drying to obtain the polymer. Conditions of the aforementioned polymerization are shown in Table 1.

Example 2

Production of a polymer was carried out in the same manner as in Example 1 except that the temperature in the polymerization vessel upon the evacuation was 50 °C instead of 30 °C. The oxygen amount after evacuation of the interior of the polymerization vessel was 10 g.

Comparative Example 1

Production of a polymer was carried out in the same manner as in Example 1 except that deionized water not subjected to pH adjustment was charged as it was instead of the deionized water adjusted to pH 4 in Example 1. In this case, the charged deionized water had a pH of 6. In addition, the oxygen amount after evacuation of the interior of the polymerization vessel was 33 g.

Comparative Example 2

Production of a polymer was carried out in the same manner as in Comparative Example 1 except that the interior of the polymerization vessel was evacuated to achieve 100 mmHg·abs. instead of 50 mmHg·abs. The oxygen amount after evacuation of the interior of the polymerization vessel was 55 g.

Comparative Example 3

Production of a polymer was carried out in the same manner as in Comparative Example 1 except that the charge amount of the 5 % by weight of the aqueous solution of the partially saponified polyvinyl alcohol having a saponification degree of 78 mol% and an average polymerization degree of 2000 was changed to 8450 g and that the interior of the polymerization vessel was evacuated to 60 mmHg·abs. instead of 50 mmHg·abs. The oxygen amount after evacuation of the interior of the polymerization vessel was 35 g.

Comparative Example 4

Production of a polymer was carried out in the same manner as in Example 2 except that a deionized water (pH=6) not subjected to pH adjustment was charged instead of the deionized water adjusted to pH 4 and that the interior of the polymerization vessel was evacuated to 55 mmH-g·abs. instead of 50 mmHg·abs. The oxygen amount after evacuation of the interior of the polymerization vessel was 12 g.

Since motive power of the agitator rapidly varied and rose 1 hour after the start of the polymerization, a polymerization inhibitor was introduced into the polymerization vessel to stop the polymerization. When unreacted monomer was recovered from the interior of the polymerization vessel, and thereafter polymer slurry was taken out of the interior of the polymerization vessel. The polymer slurry was observed, it was found that a part of the polymer formed a bulky mass. In addition, when the interior of the polymerization vessel was inspected after taking out the slurry to the exterior of the polymerization vessel, it was found that scales adhered to the entire surface of an inner wall of the polymerization vessel.

Using the vinyl chloride polymers obtained in each of Examples as samples, the particle size distribution, DOP absorption amount (take up), fish eyes, scale adhesion state and initial coloration were determined according to the following methods. Results are shown in Table 1.

Particle size distribution

Using each of sieves of #60, #100 and #150 in accordance with JIS Z-8801, the undersize distribution of particle size (% by weight) was determined.

DOP absorption amount

Glass fiber was stuffed into the bottom of a vessel made of an aluminum alloy having an inner diameter of 25 mm and a depth of 85 mm, and 10 g of a sample was introduced into the vessel. 15 ml of dioctyl phthalate (DOP) was added to the vessel made of the aluminum alloy containing the sample, which was left for 30 minutes to allow DOP to sufficiently penetrate into the sample. Thereafter an excess amount of DOP was centrifuged from the sample under an acceleration of 1500 G. An amount of DOP absorbed by the sample was determined as % by weight with respect to the weight of the sample before the absorption of DOP.

Fish eyes

50 parts by weight of DOP, 0.1 part by weight of barium stearate, 0.1 part by weight of cadmium stearate, 0.8 part by weight of cetanol, 2.0 parts by weight of a tin stabilizer, 0.5 part by weight of titanium dioxide, and 0.1 part by weight of carbon black were added to 100 parts by weight of a sample. An obtained mixture was mixed and kneaded at 140 °C for 5 minutes by using a 6 inch roll, followed by forming into a sheet having a thickness of 0.3 mm. A number of white and transparent particles in 100 cm$^2$ of the sheet was counted.

Scale adhesion state

A scale adhesion state in the polymerization vessel after removing the slurry to the exterior of the polymerization vessel was observed to make evaluation in accordance with the following criteria.
A: there is no adhesion of scales, and metal mirror surface gloss is provided.
B: metal mirror surface has clouding a little.
C: film-like scales adhere to the entire metal surface.

Initial coloration test

1 part by weight of a dibutyl tin stabilizer, 0.5 part by weight of a cadmium stabilizer, and 50 parts by weight of DOP were added to 100 parts by weight of a sample. An obtained mixture was kneaded at 160 °C for 5 minutes by using a mixing roll, followed by forming into a sheet having a thickness of 0.8 mm. 19 individuals of the sheets were overlapped and pressed at 160 °C for 10 minutes to prepare a test piece having a thickness of 15 mm, and a b value was measured by using a color meter (made by Nippon Denshoku Kogyo K.K.). Those having smaller b values were evaluated to have low initial coloration.

Table 1

| | Ex.1 | Ex.2 | Com. Ex1 | Com. Ex2 | Com. Ex3 | Com. Ex4 |
|---|---|---|---|---|---|---|
| pH[1] | 4 | 4 | 6 | 6 | 6 | 6 |
| PVA ($\bar{p}$=300)[2] | 0.03 | 0.03 | 0.03 | 0.03 | 0.03 | 0.03 |
| PVA ($\bar{p}$=2000)[3] | 0.05 | 0.05 | 0.05 | 0.05 | 0.065 | 0.05 |
| Temperature[4] | 30 | 50 | 30 | 30 | 30 | 50 |
| Pressure[5] | 50 | 50 | 50 | 100 | 60 | 55 |
| Oxygen amount[6] | 33 | 10 | 33 | 55 | 35 | 12 |
| Oxygen amount[7] | 51 | 15 | 51 | 85 | 54 | 18 |
| Time[8] | 5$^H$20$^M$ | 5$^H$18$^M$ | 5$^H$21$^M$ | 5$^H$45$^M$ | 5$^H$21$^M$ | 1$^H$0$^M$ |
| Particle size distribution[9] | | | | | | |
| #60 | 100 | 100 | 68.1 | 100 | 100 | |
| #100 | 42.5 | 22.4 | 5.1 | 51.2 | 45.2 | – |
| #150 | 7.2 | 2.1 | 0.0 | 9.2 | 7.5 | – |
| DOP take up[10] | 34.8 | 33.1 | 31.5 | 32.0 | 30.9 | – |
| Scale[11] | A | A | B | B | B | C |
| Fish eyes[12] | 0 | 1 | 7 | 7 | 10 | – |
| Coloration[13] | | | | | | |
| b value | 9.1 | 8.2 | 9.2 | 10.7 | 9.5 | – |
| evaluation | good | good | good | bad | good | – |

[1] pH of charge water

[2] charge amount of PVA ($\bar{p}$=300) having a saponification degree of 48 mol% (% by weight with respect to monomer)

[3] charge amount of PVA ($\bar{p}$=2000) having a saponification degree of 78 mol% (% by weight with respect to monomer)

4 temperature of charge mixture before evacuation (°C)

5 internal pressure of polymerization vessel after completion of evacuation (mmHg·abs.)

6 oxygen amount in polymerization vessel after completion of evacuation (g)

7 oxygen amount in polymerization vessel with respect to charged monomer (ppm)

8 polymerization time (hours, minutes)

9 undersize distribution (% by weight)

10 DOP absorption amount (%)

11 scale adhesion state

12 fish eyes (individuals/100 $cm^2$)

13 initial coloration

## Claims

1. A process for producing vinyl a chloride polymer comprising the steps of:
   charging a vinyl chloride monomer or a vinylic monomer mixture containing a vinyl chloride monomer, an oil-soluble polymerization initiator, a dispersion stabilizer and water into a polymerization vessel; and
   suspension-polymerizing said monomer in an aqueous medium;
   wherein said water is charged into the polymerization vessel in a state of pH 2.5-5.0.

2. The process according to claim 1 wherein an oxygen amount in the polymerization vessel at a time point to start said suspension polymerization is 10-70 ppm.

3. The process according to claim 1 wherein said dispersion stabilizer comprises (A) an oil-soluble partially saponified polyvinyl alcohol having an average polymerization degree of 150-600 and a saponification degree of 20-60, and (B) a water-soluble polymer.

4. The process according to claim 3 wherein the water-soluble polymer (B) is a water-soluble partially-saponified polyvinylalcohol having an average polymerization degree of 800 to 3,000 and a saponification degree of 70 to 90 mol% or hydroxypropylmethyl cellulose.

5. The process according to claim 3 wherein a weight ratio of the dispersion stabilizers (A)/(B) is 1/10 to 4/1.

6. The process according to claim 1 wherein an amount of said dispersion stabilizer is 0.005-5.0 parts by weight per 100 parts by weight of said monomer.

7. The process according to claim 3 wherein the amount of the dispersion stabilizer (A) is 0.005-1.0 part by weight per 100 parts by weight of the monomer, and the amount of the dispersion stabilizer (B) is 0.005-4.0 parts by weight per 100 parts by weight of the monomer.

8. The process according to claim 1 wherein said water is charged at pH 3.0-4.5.

9. The process according to claim 2 wherein said oxygen amount is 10-60 ppm.

10. The process according to claim 1 wherein the vinylic monomer mixture containing a vinyl chloride monomer is a mixture of the vinyl chloride monomer and at least one member selected from the group consisting of vinyl esters, acrylic esters, methacrylate esters, olefins, maleic anhydride, acrylonitrile, styrene and vinylidene chloride.

EP 0 633 273 A1

**European Patent Office**

# EUROPEAN SEARCH REPORT

Application Number

| DOCUMENTS CONSIDERED TO BE RELEVANT | | EP 94304871.0 |

| Category | Citation of document with indication, where appropriate, of relevant passages | Relevant to claim | CLASSIFICATION OF THE APPLICATION (Int. Cl. 6) |
|---|---|---|---|
| X | DE - A - 3 104 818 (HOECHST AG) * Claims 1,3; page 14, lines 11-12 * -- | 1,2, 8-10 | C 08 F 14/06 C 08 F 2/20 |
| X | DE - A - 3 227 090 (WACKER CHEMIE GMBH) * Claim 1; page 15, lines 14,15; page 16, lines 15,16 * -- | 1,8,10 | |
| X | DE - A - 3 505 238 (HOECHST AG) * Claims 1,4 * -- | 1,8,10 | |
| X | US - A - 4 345 056 (THYRET et al.) * Claim 1 * & JP-A-53 006 392 -- | 1,8,10 | |
| X | US - A - 4 360 651 (DINBERGS) * Claims 1,2,6 * -- | 1,8 | **TECHNICAL FIELDS SEARCHED (Int. Cl. 6)** |
| A | US - A - 4 845 174 (AMANO et al.) * Claims 1,6,8,13 * & JP-A-63 264 611 -- | 1,3-7, 10 | C 08 F 2/00 C 08 F 14/00 C 08 F 114/00 C 08 F 214/00 |
| A | US - A - 4 324 878 (BIAGGI et al.) * Claim 1; examples * & JP-A-55 112 210 ---- | 1,3-7 | |

The present search report has been drawn up for all claims

| Place of search | Date of completion of the search | Examiner |
|---|---|---|
| VIENNA | 10-10-1994 | PUSTERER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

9